# EUROPEAN PATENT SPECIFICATION

(11) **EP 2 701 826 B1**
(45) Date of publication and mention of the grant of the patent: **27.02.2019**
(21) Application number: 12775953.8
(22) Date of filing: 26.04.2012
(51) Int. Cl.: B01D 61/00, F23C 99/00, F23G 7/04, F23G 7/05, F23G 7/14

(54) **METHOD FOR VOLUMETRIC REDUCTION OF ORGANIC LIQUIDS**
VERFAHREN ZUR VOLUMETRISCHEN REDUKTION ORGANISCHER FLÜSSIGKEITEN
PRODUCTION DE RÉDUCTION VOLUMÉTRIQUE DE LIQUIDES ORGANIQUES

(30) Priority: 29.04.2011 US 201161480852 P; 07.09.2011 US 201161531895 P
(43) Date of publication of application: 05.03.2014
(73) Proprietor: Geosyntec Consultants, Inc., Boca Raton, FL 33487 (US)
(72) Inventor: GRANT, Gavin, Toronto, Ontario M8Y 2N5 (CA); MAJOR, David, Guelph, Ontario N1C 1A6 (CA); GERHARD, Jason, London, Ontario N6C 3T2 (CA); TORERO, Jose, Edinburgh EH8 9PP (GB); SCHOLES, Grant, Guelph, Ontario N1H 7E1 (CA); PIRONI, Paolo, Edinburgh EH16 5EE (GB); SWITZER, Christine, Edinburgh EH14 1LR (GB)
(74) Representative: Høiberg P/S
(86) International application number: PCT/US2012/035248
(87) International publication number: WO 2012/149183

(56) References cited:
- US-A- 5 819 673
- US-A1- 2006 060 525
- US-A1- 2009 180 836
- PIRONI P ET AL: "Small-scale forward smouldering experiments for remediation of coal tar in inert media", PROCEEDINGS OF THE COMBUSTION INSTITUTE, ELSEVIER, NL, vol. 32, no. 2, 1 January 2009 (2009-01-01), pages 1957-1964, XP026036800, ISSN: 1540-7489, DOI: 10.1016/J.PROCI.2008.06.184 [retrieved on 2008-10-09]
- C. SWITZER ET AL: "Self-Sustaining Smoldering Combustion: A Novel Remediation Process for Non-Aqueous-Phase Liquids in Porous Media", ENVIRONMENTAL SCIENCE & TECHNOLOGY, vol. 43, no. 15, 1 August 2009 (2009-08-01), pages 5871-5877, XP055095886, ISSN: 0013-936X, DOI: 10.1021/es803483s

## Description

### Technical Field

The present invention relates to methods of reducing the volume of organic liquids through smoldering combustion, and more particularly to methods wherein an organic liquid is aggregated in a porous matrix within an impoundment.

### Background Art

Management of organic liquids when they become wastes is a complex problem with few cost effective alternatives to reduce their impact on health, the environment, and aesthetics. Current management methods focus on the disposal of organic liquids in landfills, destruction in incinerators, and recycling. Recent advances in Integrated Waste Management (IWM) have minimized the impact of these materials through life cycle analyses and the implementation of sustainable waste management strategies; however, there remains a legacy of organic liquid waste management issues for which incineration and land fillings are currently the only practical alternatives.

Recent advances in the field of contaminant hydrogeology have shown that smoldering combustion can be used to treat subterranean volumes of soil contaminated with organic liquids. This approach is commercially available as the Self-sustaining Treatment for Active Remediation (STAR) technology and is the subject of United States Patent 8,132,978. A method for waste smoldering combustion having the features specified in the preamble of claim 1 is discussed in "Small-scale forward smouldering experiments for remediation of coal tar in inert media" by Pironi P. et al (Proceedings of the Combustion Institute, Elsevier, NL, vol. 32, no. 2, XP 026036800.

Smoldering is a flameless form of combustion, deriving its heat from reactions occurring on the surface of a solid or liquid fuel when it is heated in an oxidizing environment. An example of a smoldering combustion reaction is that of a tobacco cigarette or burning piece of polyurethane foam. Smoldering can occur only when the rate of fuel heating is lower than the rate at which the oxidizer diffuses into the fuel; thus, smoldering requires that the rate of oxidizer diffusion to the surface of the fuel be faster than the rate of heat addition required to gasify the material. Because diffusion processes are relatively slow, smoldering can only occur under conditions where the fuel has a very large surface area exposed to the oxidizer (rate of oxidizer entrainment = oxidizer diffusive flux X surface area of fuel). This condition is most commonly attained within a porous material where the material has a very large surface to volume ratio. For the case of a cigarette and other solid organic materials (e.g., garbage, coal waste, polyurethane foam, etc.), the tobacco is both the fuel and the porous matrix; whereas for the STAR process, the fuel is the organic contaminant and the porous matrix is the subterranean volume of soil.

Smoldering combustion is distinct from flaming combustion. Flaming is a combustion process by which a condensed fuel (either liquid or solid) is gasified by means of an external heat source producing a mixture of fuel and oxidizer in the gas phase that in the presence of further heating can lead to a flame. A flame has a small surface area to volume ratio; thus, the rate of heating far exceeds the rate of oxidizer diffusion. Furthermore, the flame represents a reaction between the gasified oil and the oxygen in the gas phase. Therefore, flaming combustion occurs in the gas phase between a gaseous fuel and a gaseous oxidant, which is a homogeneous combustion reaction. Smoldering combustion, conversely, occurs on the liquid / solid fuel surface as the gas phase oxidant diffuses into the condensed liquid or solid fuel; thus this process is a heterogeneous reaction.

Smoldering combustion requires a short duration energy input, and the addition of an oxidant (e.g., oxygen, air, perchlorate) to initiate and sustain the smoldering combustion reaction. Smoldering combustion is an exothermic reaction (net energy producing) converting carbon compounds and an oxidant to carbon dioxide, water and energy. Thus, following ignition via a short duration, low-input of localized energy, the smoldering combustion reaction can continue in a self-sustaining manner; for example, the heat energy required for the combustion of contaminants in STAR primarily comes from the inherent energy within the contaminants themselves.

There are numerous methodologies for the remediation of contaminated soils, including a group of technologies that use thermal processes to remove or destroy contaminants through endothermic processes (net energy consuming) such as pyrolysis and volatilization. The advantage of STAR over these other thermal remedies is that STAR takes advantage of the inherent energy in the contaminants to facilitate their destruction; whereas the other thermal remedies require the input of large amounts of heat / energy applied to the contaminated soils, often making these technologies prohibitively costly.

Current techniques for the treatment of organic wastes suffer from a similar problem - incineration, for example, is an energy intensive technology for the volumetric reduction / destruction of organic liquids, requiring continuous energy input. As a result, incineration is often a costly treatment technology.

Smoldering has traditionally been observed in solid fuels, and has been known to occur spontaneously in coal piles, or piles of solid organic waste. As for the cigarette example, smoldering combustion of these materials requires the presence of a fuel source and a porous matrix, and in most cases the fuel source and the porous matrix are one and the same thing (e.g., the tobacco). Thus, due to a lack of porous matrix, the smoldering combustion of a liquid fuel has long been dismissed as impossible. Some research has examined the combustion of a liquid fuel in a porous matrix including lagging fires occurring inside porous insulating materials soaked in oils and other self-igniting liquids, as well as enhanced oil recovery where combustion fronts are initiated in petroleum reservoirs to drive oil toward extraction points. However, the use of smoldering combustion as a means of treating, or effecting a volumetric reduction of a bulk organic liquid, has never been done.

### Summary of the Embodiments

As described below, smoldering combustion is only possible in the presence of a fuel source and a porous matrix. For a solid organic waste such as coal piles or garbage, the organic waste acts as both the fuel source and the porous matrix. For the case of an organic liquid, a porous matrix must be added to the organic liquid to create the conditions necessary for a smoldering combustion reaction to occur. This can be accomplished by adding either a reactive or inert material such as sand to the organic liquid, or by adding the organic liquid to a bed or pile of porous matrix. Once these conditions are established, smoldering combustion can be initiated within the organic liquid / porous matrix mixture in an analogous manner to that described by the STAR process: the mixture is heated and oxidant is added to initiate the smoldering combustion process; then, the heating source is terminated but the oxidant addition is continued such that a self-sustaining reaction (i.e., the energy source for smoldering combustion is the organic liquid as opposed to an external source) occurs, resulting in a volumetric reduction of the organic liquid.

Embodiments of the present invention take advantage of the surprising discovery that smoldering combustion can be used to reduce the volume of any organic liquid by first aggregating the organic liquid in porous matrices. Organic liquids or liquid fuels are not known to smolder in the absence of the aggregating step because they lack the requisite surface area common to porous solid fuels.

The present invention relies on the principles of self-sustained smoldering combustion for the treatment of organic liquids. Smoldering combustion provides benefits over traditional treatment techniques as an organic liquid treatment method such as low energy requirements, low cost, more rapid treatment, and effective treatment. Furthermore, the present invention is superior to land filling as the smoldering combustion process will transform organic liquids to primarily combustion gases, so as to forego the need to procure and maintain costly land for the storage of organic liquids. Specifically, smoldering combustion may be applied to reduce the volume of organic liquids to destroy the organic liquid by aggregating or mixing the organic liquid in a porous matrix (i.e., the "mixture"). The organic liquid is admixed with the porous matrix to produce a mixture through which an oxidant is forced and smoldering is initiated with a heat source. The heat source is then removed or terminated while the oxidant feed is maintained so as to sustain progression of the smoldering reaction through the mixture.

The energy inherent in some organic liquids (e.g., coal tar, petroleum hydrocarbons, etc.) is often more than sufficient to enable a self-sustaining reaction to occur. Some of this excess energy (i.e., excess heat) can be used to affect secondary treatment of either the organic liquid or the porous matrix into which the organic liquid is partially or fully admixed. For example, heavy metals are a common soil contaminant and are often found to be present in organic liquids such as petroleum hydrocarbons. While heavy metals are not organic and will not combust, some heavy metals such as mercury are volatile and can be removed from soils or organic liquids for subsequent treatment through the excess heat generated by a self-sustaining smoldering combustion process. Similarly, it is known that some forms of asbestos are rendered non-toxic at temperatures above 700 degrees Celsius; therefore, the excess heat from a self-sustained smoldering combustion process can be used to treat soils and slurries containing asbestos minerals. Finally, the excess heat of a self-sustaining smoldering combustion reaction can be used to dry soils when moist or water-bearing soils are used as the porous matrix in the process.

In contrast, some organic liquids lack sufficient energy to enable a self-sustaining reaction to occur. As they are organic, these compounds will combust, but without sufficient inherent energy, an external energy supply is required to maintain the reaction. This can be overcome through the batch addition of a fuel additive to increase the inherent energy of the mixture; thus, enabling self-sustaining smoldering to proceed. It may also be of benefit to add a fuel additive to affect the characteristics of the smoldering reaction (e.g., temperature), even if the combustion reaction is self-sustaining without the addition of the fuel additive.

In some embodiments of the invention, the smoldering process does not require the use of ceramic, tinder or starter fuel to initiate the smoldering combustion. Also, there is no need to create channels in the bulk of the aggregate to maintain the smoldering, as may be required in the smoldering of a solid.

In a first embodiment of the invention there is provided a method for volumetric reduction of organic liquid. The method comprises admixing a porous matrix material with the liquid to produce a mixture, heating the mixture, forcing oxidant through the mixture, initiating and maintaining self-sustaining smoldering combustion of the mixture, and terminating the heating source, so as to cause volumetric reduction of the organic liquid. In certain embodiments, the reaction conditions are maintained so as to cause the propagation of the smoldering combustion through the mixture away from the point of ignition.

In particular embodiments, the organic liquid is aggregated prior to volumetric reduction. The methods of these embodiments further comprise aggregating the organic liquid in a reaction vessel. Additional embodiments further comprise aggregating the organic liquid in a matrix pile that includes the porous matrix material. Yet other embodiments further comprise aggregating the porous matrix in an organic liquid waste lagoon.

Further embodiments comprise continuously feeding the mixture into a zone of smoldering combustion.

According to the invention, admixing the porous matrix material comprises batch-feeding of the organic liquid and the porous material into the vessel.

Additional embodiments comprise using a mixing tool to admix the porous matrix material with the organic liquid to produce the mixture. In particular embodiments, the mixing tool includes a rotating helical blade.

In another embodiment of the invention, a method for volumetric reduction of organic liquids is provided wherein admixing the porous matrix material with the organic liquid to produce the mixture comprises forming a permanent or semi-permanent confinement bed comprising the porous matrix material, and continuously pouring the organic liquid into the confinement bed. In another embodiment of the invention, admixing the porous matrix material with the organic liquid to produce the mixture comprises forming an organic liquid confinement bed comprising the organic liquid, and continuously pouring the porous matrix material into the organic liquid confinement bed.

In particular embodiments, forcing oxidant through the mixture includes injecting air into the mixture through an injection port. In certain embodiments, forcing oxidant through the mixture includes injecting air into the mixture through a plurality of injection ports. In other embodiments, forcing oxidant through the mixture includes injecting oxygen into the mixture through an injection port. In certain embodiments, forcing oxidant through the mixture includes injecting oxygen into the mixture through a plurality of injection ports. In other embodiments, forcing oxidant through the mixture includes injecting a liquid oxidant into the mixture through an injection port. In certain embodiments, forcing oxidant through the mixture includes injecting a liquid oxidant into the mixture through a plurality of injection ports. In certain embodiments, forcing oxidant through the mixture includes creating a vacuum to suck oxidant through the mixture. In other embodiments, the oxidant is located within the mixture prior to initiating smoldering combustion.

In certain embodiments, initiating smoldering combustion includes applying heat to the mixture from at least one of a plurality of heating sources for an amount of time sufficient to initiate smoldering combustion. In particular embodiments, at least one of the plurality of heating sources is a convective heating source external to the mixture. In yet other particular embodiments, at least one of the plurality of heating sources is a convective heating source located within the mixture. In yet other embodiments, at least one of the plurality of heating sources is an internal conductive heating source in direct contact with the mixture. In other embodiments, at least one of the plurality of heating sources applies radiative heat to the mixture.

In yet further embodiments, initiating smoldering combustion includes applying heat to the mixture from an internal conductive heating source in direct contact with the mixture. In other embodiments, initiating smoldering combustion includes applying heat to the mixture from a convective heating source coupled to the mixture. In particular embodiments, the convective heating source is external to the mixture. In other embodiments, the convective heating source is located within the mixture. In other embodiments of the invention, initiating smoldering combustion includes applying radiative heat to the mixture. In other embodiments of the invention, initiating smoldering combustion includes applying heat to the mixture through a combustion reaction. In other embodiments of the invention, initiating smoldering combustion includes applying heat to the mixture through an exothermic chemical reaction.

In certain embodiments, the heating source to the mixture is terminated following the initiation of smoldering combustion. In other embodiments, at least one of the plurality of heating sources to the mixture is terminated following initiation of smoldering combustion.

In another embodiment of the invention, methods for volumetric reduction of organic liquids further comprise admixing the porous matrix material with the organic liquid using a helical mixing tool to produce the mixture, supplying the mixture via a first conveyor system into the zone of smoldering combustion, and removing the combusted product via a second conveyor system.

Certain embodiments further comprise aggregating the organic liquid above ground level. Other embodiments further comprise aggregating the organic liquid below ground level.

In particular embodiments, the porous matrix material is selected from a group comprising sand, soils, silt, loam, fill, cobbles, gravel, crushed stone, glass, ceramics, zeolite, woodchips, charcoal, coal, drill cuttings and combinations thereof. Certain embodiments further comprise carrying out the smoldering combustion at a temperature within a range between 200 and 2000 degrees Celsius. Other embodiments further comprise forcing air through the mixture at a linear velocity of between 0.0001 and 100 centimetres per second.

Another embodiment of the invention further comprises admixing a supplemental fuel with the porous matrix material and the organic liquid prior to combustion.

In certain embodiments, the organic liquid is a liquid. In other embodiments, the organic liquid is a sludge. In other embodiments, the organic liquid is a slurry. In other embodiments, the organic liquid is an emulsion.

In another embodiment of the invention, a method for volumetric reduction of organic liquids is provided comprising aggregating the organic liquid in a reaction vessel, matrix pile or lagoon to form an aggregate. The embodiment further comprises adding a supplemental fuel selected from a group comprising vegetable oil, tar, chemical oxidants, drilling muds, and petroleum hydrocarbons to the aggregate. The embodiment also comprises admixing a porous matrix material selected from a group comprising sand, soils, silt, loam, fill, cobbles, gravel, crushed stone, glass, ceramics, zeolite, woodchips, charcoal, coal, drill cuttings and combinations thereof with the organic liquid to produce a mixture to enable a self-sustaining smoldering combustion. The embodiment further comprises forcing air through the mixture from at least one air supply port and initiating self-sustaining smoldering combustion of the mixture from at least one conductive, convective or radiative heater to cause volumetric reduction of the organic liquid.

In general terms, in each of the above described embodiments, it is desired to promote / maintain self-sustained smoldering combustion as a method of volumetrically reducing organic liquid.

### Brief Description of the Drawings

The foregoing features of embodiments will be more readily understood by reference to the following detailed descriptions, taken with reference to the accompanying drawings, in which:
Fig. 1 is a schematic cross-sectional view of a mixing vessel of embodiments of the invention and an exemplary mixing tool.
Fig. 2 is a schematic cross-sectional view of a mixing vessel containing a fixed or loose porous matrix.
Fig. 3 is a schematic cross-sectional view of an organic liquid lagoon containing a volume of organic liquid into which a matrix material is added.
Fig. 4 is a schematic cross-sectional view of a matrix pile or soil pile to which an organic liquid material applied and admixed.
Fig. 5 is an enlarged schematic view of an organic liquid / porous matrix mixture according to embodiments of the invention.
Fig. 6 is a schematic cross-section of a combustion reaction vessel comprising an oxidant source, an air supply port and heating elements.
Fig. 7A is a cross-sectional schematic of an organic liquid lagoon comprising an admixture of organic liquid and porous matrix with a plurality of air supply ports and heating elements.
Fig. 7B is a cross-sectional schematic of a soil pile comprising an admixture of organic liquid and porous matrix with a plurality of air supply ports and heating elements.
Fig. 8A is a cross-sectional schematic of an organic liquid lagoon comprising an admixture of an organic liquid and porous matrix, oxidant source, air supply port within the lagoon, and alternative heating elements. Fig. 8B is a cross-sectional schematic of a soil pile comprising an admixture of an organic liquid and porous matrix, oxidant source, air supply ports within the pile, and alternative heating elements.
Fig. 9 is an illustration of a combustion front progressing through the admixture of an organic liquid and porous matrix material along the direction of air flow.
Fig. 10 is a cross-section view of a reaction vessel where a conveyor or auger device is used to convey a continuous or semi-continuous supply of an admixture of an organic liquid and porous matrix material to a smoldering combustion reaction front.
Fig. 11 is a cross-sectional schematic of a reaction vessel with a fixed or semi-permanent porous matrix where a continuous or semi-continuous supply of an organic liquid is added to the porous matrix material.
Fig. 12 is a flow diagram illustrating particular steps according to the embodiments of the invention.
Fig. 13 is a plot of the temperature evolution over time in a self-sustained smoldering of an oil/sand mixture.
Fig. 14 is a table presenting concentrations of petroleum hydrocarbons in the F1 and BTEX range, F2-F4 range, and PAH compounds of the oil / sand mixture before and after treatment according to the method of the present invention.
Fig, 15 shows the photographs of coarse sand as the porous matrix alone (A); the mixture of the sand with oil before treatment (C); and the porous matrix after treatment (B).

### Detailed Description of Specific Embodiments

Definitions. As used in this description and the accompanying claims, the following terms shall have the meanings indicated, unless the context otherwise requires.

The term "porous matrix" means a synthetic or natural solid material having pores (open spaces) and wherein the solid material may be a single piece having pores or a collection of granular solids having pores there between. Examples of materials suitable of comprising the porous matrices of embodiments of the present invention include sand, soils, silt, loam, fill, cobbles, gravel, glass beads, wood chips, zeolite, crushed stone, ceramic chips or beads, charcoal, coal, drill cuttings and combinations thereof.

The term "smoldering combustion" of a composition means the act or process of burning without flame; a rapid oxidation accompanied by heat and light but not flame; the combustion occurs at the surface of the composition (i.e., not in the gas phase above the composition as with a flame), in this case, the composition is a mixture of an organic liquid and a porous matrix.

The term "organic liquid" means an organic material that can flow as a liquid or has plasticity as goo containing organic carbon compounds and includes materials that are partially liquid such as a hydrocarbon sludge, slurries or emulsions.

"Self-sustaining" means reaction conditions wherein smoldering combustion is maintained in an organic liquid or propagates through an organic liquid without the application of external energy; that is, when the already smoldering organic liquid produces sufficient heat to elevate the temperature in the adjacent matter to its combustion point. Conditions may be self-sustaining even if initially the application of heat is required to initiate smoldering combustion.

The term "matrix pile" means any pile, mound or vertical conglomeration or aggregation of a porous matrix material. The matrix pile may be either permanent or semi-permanent.

The term "ignition" means the process of initiating combustion.

The term "conductive heating" means the transfer of thermal energy by direct physical contact.

The term "convective heating" means the transfer of thermal energy by the movement of fluids.

The term "radiative heating" means the transfer of thermal energy by electromagnetic radiation.

The term "mixing tool" means an implement that when in use combines or blends the organic liquid and porous matrix into a mass or mixture.

An "impoundment" of organic liquid is an aggregation of an organic liquid in a vessel, or in a pile on the ground, or in a below ground-level cavity. Similarly, an "impoundment" of a mixture of an organic liquid with a matrix is an aggregation of the mixture in a vessel, or in a pile on the ground, or in a below ground-level cavity.

Smoldering is a heterogeneous combustion reaction because the oxidant (gas) and the fuel (liquid or sludge) are distinct phases. This is in contrast to flaming combustion, which is a homogeneous reaction occurring in a single (gas) phase.

In embodiments of the present invention, the porous matrix serves as a scaffold to entrap the organic liquid in an environment that facilitates smoldering combustion. Smoldering combustion is maintained through the efficient recycling of energy within the system. First, the organic liquid is combusted, giving off heat energy which is retained or absorbed by the porous matrix. Second, the retained or absorbed heat energy is re-radiated or returned to the system from the porous matrix or transferred through the mixture by moving fluids (e.g., oxidant gas) to pre-heat the organic liquid material farther removed from the point in space where the combustion process was initiated. Thus, following a short duration energy input to initiate the process, smoldering combustion is self-sustaining (i.e., it uses the energy of the combusting organic liquids, along with a supply of oxidant, to maintained the reaction) and is capable of propagating away from the point of ignition into the combustible matter. Smoldering is the only type of combustion reaction that can propagate through a waste / porous matrix mixture (i.e., flames are not capable of propagating through such a system). In a self-sustaining process, the heating source is terminated following the initiation of smoldering combustion.

The self-sustaining smoldering combustion process can be extended to the treatment of organic liquids if the following conditions are met: (1) the organic liquid contains sufficient inherent energy to sustain a smoldering combustion process (i.e., it is a combustible material); (2) it is mixed with a porous matrix to enable the smoldering process; (3) a heat source is provided to initiate the process; (4) a supply of oxidant (e.g., oxygen, air, perchlorate) is provided to initiate and maintain the process; and (5) the heat source is terminated following initiation of smoldering combustion.

The self-sustaining smoldering combustion treatment method applies to either organic liquids, sludges, slurries, or emulsions and can be conducted in synthetic or natural porous media or granular solid matrices. In many applications, it is expected that the wastes may be at least partially in the liquid phase; for example, as a hydrocarbon sludge, slurry or emulsion.

The self-sustaining smoldering combustion process has numerous advantages for the treatment of organic liquids. For one, the combustion products of the process are carbon dioxide, carbon monoxide, energy and water; therefore, land filling of the organic liquid is not required. Second, the process is self-sustaining (i.e., it uses the energy of the combusting organic liquids, along with a supply of oxidant, to maintain the reaction). Therefore, the smoldering combustion process avoids the need for the continuous addition of energy, heat, or fuels as in an incineration process.

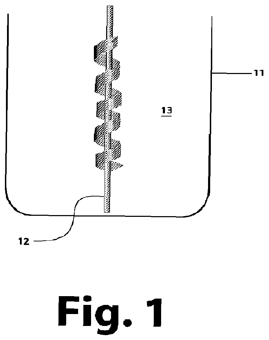

Fig. 1 illustrates a mixing vessel (11), according to certain embodiments of the invention, into which the organic liquid and porous matrix are added. A mixing tool (12) is used to create an admixture of organic waste and porous matrix material (13). In particular embodiments of the invention, mixing may occur within the reaction vessel or impoundment in which smoldering combustion is to be initiated. In the particular embodiment of Fig. 1, a helical mixing tool (12) is depicted, although any shape may be used, including corkscrew and paddle-shaped mixing tools.

A mixing vessel (11) may be a manufactured cylindrical column or rectangular box (e.g. stainless steel-walled vessel) or bin, an excavated hole, designated pile, or walled-in enclosure in which a porous media is emplaced and mixed with the organic liquid in preparation for application of the smoldering process.

The porous media may be a loose or fixed porous material (13). A fixed porous matrix may be a manufactured (e.g. steel mesh, porous plate, etc.) or natural (e.g. lava rock, coral, etc.) material. A loose porous matrix may be manufactured (steel shot, glass beads, etc.) or natural (e.g. gravel, sand, etc.) materials.

Mixture emplacement may be achieved manually, via backhoe or excavator, automatically via screw conveyor or conveyor belt systems. Liquid emplacement may be achieved via pouring, pumping, conveyor, or gravity feed (e.g., siphoned).

Any organic liquid may be volumetrically reduced by the methods disclosed herein. Examples of organic liquids for which the methods are particularly effective include hydrocarbon mixtures such as coal tar and creosote, petroleum hydrocarbons, drilling muds, and waste sludges.

The smoldering combustion used herein is preferably initiated and maintained under conditions in which it becomes self-sustaining. Some material may contain sufficient energy such that smoldering can be initiated and maintained without adding energy-increasing substances to the waste or admixture. However, certain waste substances may require the batch addition of one or more fuel supplements prior to ignition to ensure that the ensuing smoldering combustion becomes self-sustaining, or that the ensuing smoldering combustion has certain characteristics such as a higher temperature. Exemplary fuel supplements include vegetable oil, tar, drilling muds, and petroleum hydrocarbons.

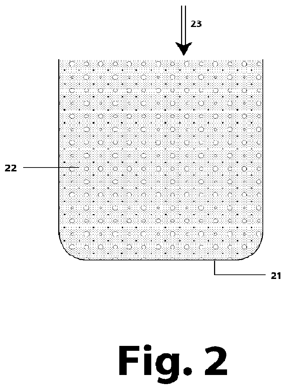

Fig. 2 depicts another embodiment of the invention in which a mixing or reaction vessel (21) contains a fixed or loose porous matrix (22) into which organic liquid (23) is added to create an admixture of organic liquid and porous matrix material. In particular embodiments where a liquid or semi-liquid organic material is volumetrically reduced, an admixture is created as the organic liquid percolates between the matrix particles. In embodiments where the porous matrix is loose, mixing may be assisted by using a mixing tool as described herein.

The mixing tool may be a mechanical mixer (12) such as an auger or a screw or other rotating devices. Mixing may also be achieved via vibration, or rotation (flipping) of the entire vessel. The mixing may also be achieved passively by adding the liquid to the porous media within the vessel and allowing it to disperse naturally due to gravity or capillarity or by injecting under pressure into the bottom of the vessel, filling the pore space of the media as it migrates to the top of the vessel. The organic liquid may be added to the porous matrix as a flow or stream of liquids through a pipe, chute, or other emitter.

The mixing process may take place within the same vessel used for the smoldering process in a continuous, batch or semi-batch process, or completed in a separate dedicated mixing vessel or apparatus.

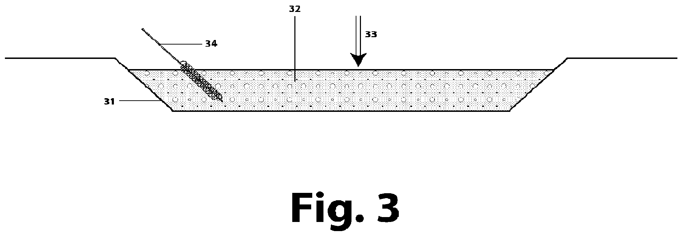

Addition of the loose matrix material (22 or 33 of Fig. 3 below) may be achieved manually, via backhoe or excavator, or automatically via screw conveyor or conveyor belt systems.

The conveyor system may be a screw or belt conveyor system leading from a mixing vessel to the reaction vessel and from the reaction vessel to a treated matrix soil pile. The admixture conveyor may be a screw conveyor or other mechanical conveying device or be a release mechanism to allow the gravity-fed passage of treated material through the reaction vessel.

An aspect of the invention includes aggregation of organic liquid in a porous matrix. In embodiments described herein, aggregation occurs when the organic liquid impoundment is in an above-ground vessel. However, it is also possible to practice an embodiment of the invention when the organic liquid is in an impoundment below ground (i.e., below the surface of the earth) in a cavity such as a lagoon or pool. Fig. 3 illustrates an embodiment wherein the impoundment is an organic liquid lagoon (31). The lagoon includes a volume of semi-solid, or organic liquid (32) and into which a loose matrix material (33) is added and admixed with a mixing tool (34) to create an admixture of organic liquid and porous matrix material. An example of an organic liquid lagoon (31) may be a lined or unlined excavation, converted pool, or natural depression used to accumulate and store an organic liquid (32). It should be appreciated that the order of addition is not particularly important. Embodiments are also possible where the lagoon is first filled with porous matrix material and the organic liquid added thereafter or when the porous matrix material is natural ground of fill and the organic liquid is spilled upon the natural ground or fill and percolates into the natural ground or fill. Either way, an admixture is formed in below-ground space of suitable proportions to permit smoldering combustion and reduction of the liquid.

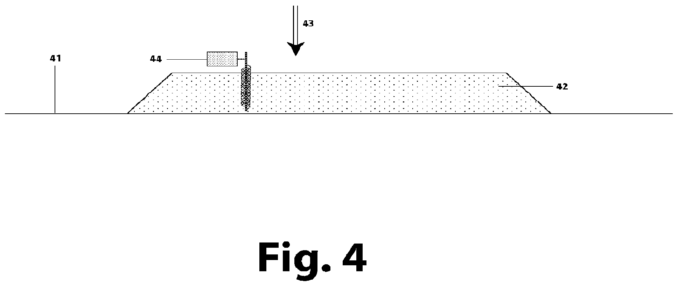

Further embodiments are possible where the organic liquid impoundment is above-ground in a matrix pile or mound. Fig. 4 illustrates such an embodiment where a matrix pile (42) rests on the surface of the earth (41) into which an organic liquid material (43) is applied. A mixing tool (44) may be utilized to circulate the organic liquid and create the admixture. The matrix pile may either be freestanding or may be supported within or by additional structures. For example, walls may be used to encase the pile.

An example of a matrix pile (42) may be a pile of material excavated for the construction of a depression, a pile of contaminated material excavated as part of a site remediation strategy, or a stockpile of granular material. The organic material may be applied or admixed with the matrix pile by pouring the organic liquid onto the surface of the matrix pile through a pressurized or gravity-fed pipe, chute, or emitter, and allowing it to percolate into the matrix pile under gravity or forced pressure, tilled into the matrix pile via tillers or hoes, mixed via backhoe, excavator or soil mixing / drilling rigs.

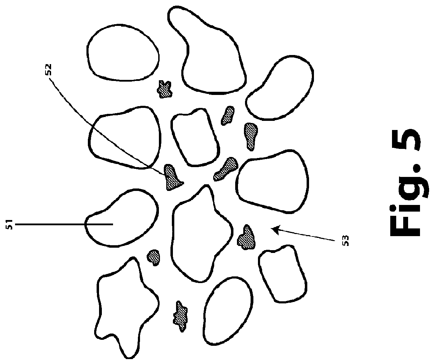

Fig. 5 illustrates an organic liquid / porous matrix mixture including solid particles (51) and continuous or discontinuous blobs or ganglia of organic liquid (52) located within the pore spaces (53) of the porous matrix. Embedding the combustible material in a porous matrix has several advantages. First, it permits concentration of the organic liquid in a confinement bed. The dimensions and volume of the confinement bed can be fixed to precisely control the amount and spatial location of the volumetric liquid reduction. Second, when exothermic reactions (i.e., combustion) release sufficient energy, the reaction can be self-sustaining in porous media.

Although the principle of heat recirculation is readily understood, its practical application requires balancing many variables to ensure efficiency, controlled combustion intensity (i.e., to maintain smoldering), and control pollutant emissions. Particular attributes of the porous matrix that require optimization include porous matrix particle size (e.g., from micrometers to many inches), pore size, permeability (1x10⁻⁵ centimeters per second to 100s of centimeters per second), and mineralogy (e.g., silica sand, carbonate sand, etc.). Particular attributes of the organic liquid that require optimization include chemical composition (e.g., carbon content and inherent heat energy), viscosity (e.g., 1 centistoke to hundreds of centistokes), density (e.g., 200 to thousands of kilograms per cubic meter), volatility (e.g., volatile, semi-volatile, non-volatile), and wettability (e.g., organic wetting or organic non-wetting). Particular attributes of the combustion system that require optimization include pre-heating time (minutes to days), pre-heating intensity (temperatures ranging from one hundred degrees Celsius to two-thousand degrees Celsius), initial oxidant flow rate (from a few millimeters per second to tens of centimeters per second), maintained oxidant flow rate (from a few millimeters per second to tens of centimeters per second), air pressure (ambient to tens of pounds per square inch of air pressure), and oxidant content (e.g., air to purified oxygen).

In embodiments of the invention, the following porous matrix materials have been found to form suitable admixtures with the organic liquid: sand, soils, silt, loam, fill, cobbles, gravel, ceramic beads, and glass beads. These materials, if sized correctly, will create a mixture with an organic liquid with a surface area to volume ratio such that oxidant diffusion rates may exceed heating rates and that a sufficient amount of heat generated during the combustion process is transferred to and stored in the matrix material, so as to make the heat stored in the matrix material available to assist in further combustion of the organic liquid. The matrix material has further characteristics of sufficient pore space to receive organic liquid admixed therewith, and surface, shape, and sorting characteristics that are amenable to air flow through the pore spaces. The process will operate through a range of organic liquid to porous matrix ratios, but is generally constrained to organic liquid contents that occupy between 0.01% and 100% of porous matrix pore space.

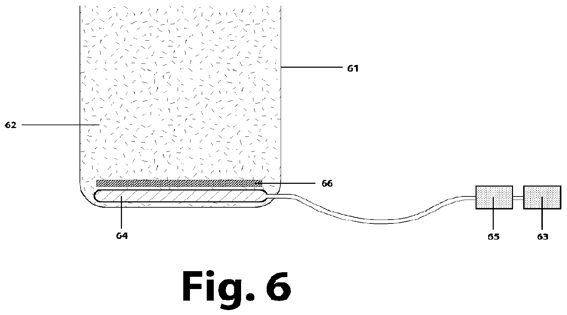

Ignition of smoldering combustion requires both a heating source to initiate combustion and a source of oxidant to initiate and maintain combustion. Fig. 6 illustrates a combustion reaction vessel (61) containing an admixture of organic liquid and porous matrix (62). Oxidant is supplied to the reaction vessel from an oxidant source (63) through an air supply port (64). The air supply port may comprise a single aperture into the reaction vessel or may comprise a manifold with multiple apertures placed within the reaction vessel. Two different heating sources are depicted, which may be used either alone or in combination. For example, a heating source (65) may be placed in-line with the supplied oxidant to supply convective heat to the admixture. Convective heating sources may also be positioned within the reaction vessel or within the walls of the reaction vessel. Additionally, an internal heating source (66) may be placed within the reaction vessel to supply conductive or radiative heat for ignition and maintenance of smoldering. As shown in Fig. 6, the internal conductive / radiative heating source may be placed towards the bottom of the reaction vessel to propagate a "bottom-to-top" combustion front. Additional conductive heat sources may be placed throughout the interior walls of the reaction vessel to initiate combustion at varying levels within the admixture.

The oxidant source may be an air compressor connected to the reaction vessel through piping or tubing with regulated or unregulated pressure or flow. The air supply port may be a series or singular section of perforated pipe or an open cavity (plenum) to distribute oxidant in the desired pattern across the base of the admixture. The heating element may be an electrically-powered cable heater, electrically-powered cartridge heater, radiative tube heater in which propane or other external fuel source is internally supplied and combusted.

The air supply ports may be perforated direct-push carbon-steel, stainless-steel or other material rods, carbon-steel, stainless-steel or other material wells with wire-wrapped or slotted screens installed vertically or near vertically through the matrix pile or lagoon. The heating elements may be electrical resistive heaters or radiative heaters installed or placed within the rod or wells, installed in the matrix pile surrounding the rod or well, or an above-ground element heating air passing through the rod or well and into the matrix pile.

In particular embodiments, the oxidant is oxygen supplied as a component of atmospheric air. The reaction is controllable such that terminating the supply of oxygen to the reaction front terminates the reaction. Increasing or decreasing the rate of oxygen flux to the reaction front will also increase or decrease the rate of combustion and, therefore, the propagation rate of the reaction front, respectively.

It should be appreciated that combustion can be monitored according to methods known to those of skill in art to determine the amounts of oxygen, air or other oxidant required to maintain smoldering combustion. Combustion temperatures are commonly monitored with thermocouples which can be placed throughout the volume of material to be treated. Combustion gases can also be collected at the outlet of the reaction vessel or at the surface of the admixture of organic liquid and porous matrix material to characterize organic liquid mass destruction rates and the efficiency of the combustion. Such methods are of common practice for the monitoring of many combustion processes including incineration systems.

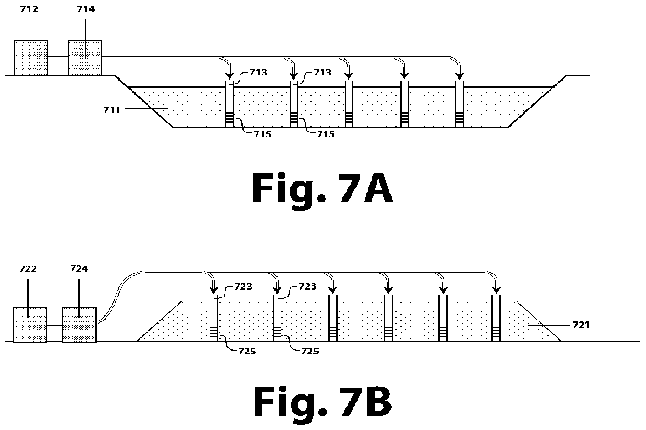

As illustrated in Fig. 7, embodiments of the present invention may utilize impoundments with multiple air supply ports and heating elements. Fig. 7A depicts an embodiment wherein the impoundment is an organic liquid lagoon containing an admixture of organic liquid and porous matrix (711). Oxidant may be supplied to the organic liquid lagoon or matrix pile from an oxidant source (712) that is coupled to air supply ports (713). The air supply ports may be boreholes drilled into a sufficiently solid mixture. Alternatively, the air supply port may be perforated hollow shafts inserted into sufficiently solid or even relatively liquid mixtures. The air supply ports may be spaced according to the overall dimensions of the lagoon so that oxidant is delivered in sufficient quantity and at a sufficient rate throughout the lagoon; thereby facilitating smoldering combustion throughout the lagoon. Similarly, a single or plurality of convective heating element(s) (714) may be placed in-line with the supplied air to initiate smoldering combustion at multiple points within the lagoon. Additionally or alternatively, multiple conductive, convective or radiative heating elements (715) may be positioned within the boreholes or shafts or within backfilled materials so that they are internal to the lagoon.

Fig. 7B is an embodiment wherein the impoundment is a matrix pile (721). As above, both multiple air supply ports and heating elements may be used. For example, oxidant may be supplied to the organic matrix pile from an oxidant source (722) that is coupled to air supply ports (723). The air supply ports may be boreholes drilled into a sufficiently solid mixture or perforated hollow shafts inserted into sufficiently solid or even relatively liquid mixtures. The air supply ports may be spaced according to the overall dimensions of the pile so that oxidant is delivered in sufficient quantity and at a sufficient rate throughout; thereby facilitating smoldering combustion throughout the pile. Similarly, a single or plurality of convective heating element(s) (724) may be placed in-line with the supplied air to initiate smoldering combustion at multiple points within the matrix pile. Additionally or alternatively, multiple conductive, convective or radiative heating elements (725) may be positioned within the boreholes or shafts or within backfilled materials so that they are internal to the matrix pile.

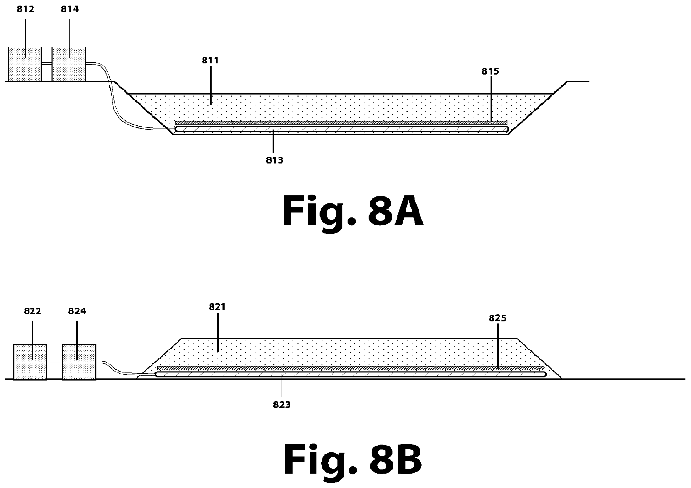

Fig. 8 illustrates additional embodiments of impoundments with air supply ports and heating element(s). In Fig. 8A, an organic liquid lagoon is shown containing an admixture of organic liquid and porous matrix (811). Oxidant is supplied to the organic liquid lagoon from an oxidant source (812) through an air supply port(s) (813) within or beneath the lagoon. The air supply ports may comprise multiple entry points into the lagoon or, as depicted, a manifold-type installation placed towards the bottom of the lagoon. Heating element(s) (814) may be placed in-line with the supplied oxidant or within or beneath the lagoon. As above, the particular position of the heating element(s) and air supply ports may be optimized to facilitate smoldering combustion as needed for a given organic liquid material.

Fig. 8B is a corresponding embodiment wherein the impoundment is a matrix pile. In Fig. 8B, a matrix pile is shown containing an admixture of organic liquid and porous matrix (821). Oxidant is supplied to the pile from an oxidant source (822) through an air supply port (823) within or beneath the pile. As described for lagoon embodiments, several configurations of air supply ports are possible, including multiple inlets and single manifold-type structures. Heating element(s) (824) may be placed in-line with the supplied oxidant to provide convective heat. Additionally or alternatively, a conductive, convective or radiative heating source (825) may be placed within or beneath the pile. Smaller, individual conductive, convective or radiative heating sources may also be placed at multiple locations within the pile.

The air supply ports may be perforated direct-push carbon-steel, stainless-steel or other material rods, carbon-steel, stainless-steel or other material wells with wire-wrapped or slotted screens installed horizontally through the matrix pile or lagoon. The heating elements may be electrical resistive heaters or radiative heaters installed or placed within the rod or wells, installed in the matrix pile surrounding the rod or well, or an above-ground element heating air passing through the rod or well and into the matrix pile.

Embodiments of the present invention may be designed such that a combustion front propagates through a reaction vessel, matrix lagoon or matrix pile. The combustion front may be directed through heating and air flow spatial manipulations to proceed upwards or laterally in any direction.

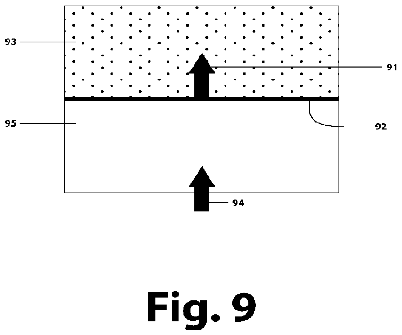

Fig. 9 illustrates the progress (91) of the combustion front (92) through an admixture of organic liquid and porous matrix material (93). In these embodiments, propagation of the combustion front proceeds along the direction of air flow (94). As the combustion front proceeds through the porous matrix, organic liquid within the combustion front is combusted and organic liquid in advance of the combustion front is heated. In this particular embodiment, combustion of the organic liquid proceeds essentially to completion, leaving behind an area of porous matrix (95) where the organic liquid has undergone a volumetric reduction as a result of smoldering combustion.

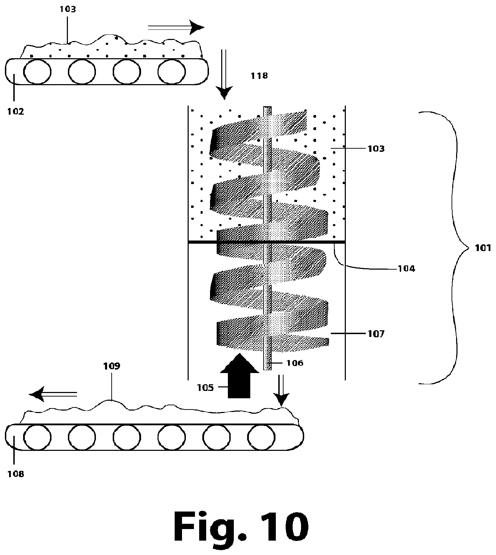

Additional embodiments may convey the organic liquid/porous matrix relative to the combustion front. Fig. 10 illustrates a reaction vessel (101) according to such an embodiment where a first conveyor or auger device (102) is used to convey a continuous or semi-continuous supply of an admixture of organic liquid and porous matrix material (103) to a pseudo-stationary smoldering combustion reaction front (104). The admixture supply is maintained through use of the conveyor system (102) transporting a pre-mixed admixture of organic liquid and porous matrix material (103) to the reaction vessel. The smoldering combustion reaction front is maintained through the addition of oxidant (105). A mixing or conveyor tool (106) may be utilized to propagate the mixture through the reaction vessel. Although a helical mixing tool is depicted, alternatively shaped tools (e.g., corkscrews, paddles) may be used. The mixing tool may also serve to circulate oxidant through the admixture. At the combustion front, the organic liquid in the mixture is essentially consumed as a result of smoldering combustion, and a volumetric reduction (106) is achieved. The treated porous matrix (107) is withdrawn from the reaction vessel in a continuous or semi-continuous manner and transported along a second conveyor system (108) as a treated porous matrix (109).

In additional embodiments, the organic liquid may be admixed with a porous matrix that is itself combustible (e.g., woodchips). That is, the entire mixture may be essentially consumed at the combustion front, leaving only non-organic matrix residue (e.g., ash). In such embodiments, the residue may be removed by a conveyor or auger device as shown in Fig. 10.

In certain embodiments, a fixed or semi-permanent porous matrix may be used. Rather than mixing the organic liquid and porous matrix per se, these embodiments allow the organic liquid to percolate through a bed of fixed or semi-permanent matrix. In particular embodiments with a semi-permanent matrix, however, percolation may be assisted with a mixing tool.

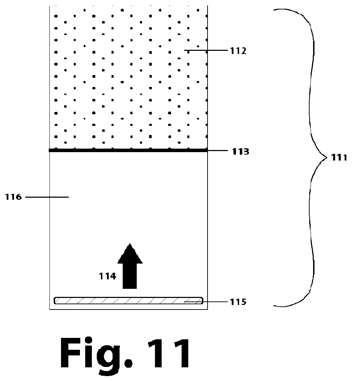

Fig. 11 illustrates a particular embodiment with a fixed or semi-permanent porous matrix. A reaction vessel (111) is shown with a bed of fixed or semi-permanent porous matrix (112) to which a continuous or semi-continuous supply of an organic liquid is added (not shown). After the admixture is formed, smoldering may be initiated at the smoldering combustion reaction front (113). Smoldering may be initiated by convective, conductive or radiative heating elements placed outside, on, or in the reaction vessel proximal to where smoldering is to be initiated. Smoldering may be maintained through the addition of oxidant (114) via an air supply port (115). The combustion front proceeds along the direction of air flow through the mixture of permanent or semi-permanent porous matrix and organic liquid. The position of the combustion reaction front (124) is governed by the rate of oxidant addition (123), the rate of organic liquid addition and the properties of the admixture of organic liquid, porous matrix material, and operational parameters (e.g., air flow rate). As the combustion front proceeds, organic liquid is volumetrically reduced. Below the combustion front is treated porous matrix (116).

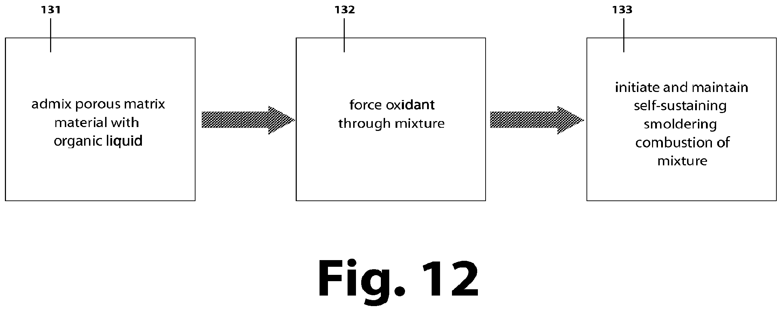

Fig. 12 is a flow diagram of embodiments of the invention. First, a porous matrix is admixed with an organic liquid (131). As described above, a particular matrix/ liquid combination and ratio may be chosen to facilitate smoldering combustion for specific types of organic liquid. Next, oxidant is forced through the mixture (132). The presence of oxidant allows smoldering combustion to be initiated and maintained (133). As described above, the amount of oxidant, rate of flow, and additional components (e.g., supplemental fuels added prior to ignition) may be utilized to ensure that combustion is maintained in a smoldering state and to optimize the combustion for a particular mixture.

### Example 1:

Smoldering combustion tests for the treatment of a liquid oily material (oil and gas refinery waste product) were carried out in a quartz glass column 138 millimetres (mm) in diameter and 275 mm in height. To prepare the contaminated material, the oily material was mixed in a mass ratio of 259 grams of oil per kilogram of commercially available quartz sand (#12ST Silica Sand, Bell & Mackenzie Co. Ltd., Hamilton, Canada) that is characterized by a bulk density of 1,600 kilograms per cubic meter, a mean grain size of 0.88 mm, and an average porosity of 37% when dry packed. The mixture was homogenized by mechanical mixing prior to packing in the apparatus to a thickness of eleven centimeters. The mixture was underlain by an air diffuser supplied by an air compressor and an inconel-sheathed cable heater (Bluewater Heater Inc., Canada). Eleven inconel-sheathed Type K thermocouples were inserted into the sand pack along the column central axis and spaced at 10 mm intervals above the cable heater to track temperatures within the apparatus and, therefore, the location of the combustion front as it propagates through the mixture. The thermocouples were connected to a data acquisition system (Multifunction Switch/Measure Unit 34980A, Agilent Technologies).

At the start of the experiment, the mixture was heated by applying a current to the cable heater and air flow was initiated through the air diffuser at a (Darcy) flux of 5.0 centimeters per second until the threshold temperature of 280 degrees Celsius was exceeded two centimeters above the cable heater location. This method of heating simulates a combined conductive and convective heating source. Then, air injection was increased and maintained until the end of the experiment at a (Darcy) flux of 9.0 centimeters per second. The cable heater was turned off when the temperature one centimetre above the cable heater location began to decrease with time (i.e., post peak), approximately 9 minutes after increasing the air flux from 5.0 to 9.0 centimeters per second. The experiment ended when the temperature eleven centimetres above the cable heater (i.e., at the top of the mixture) began to decrease with time (i.e., post peak), approximately 23 minutes after increasing the air flux from 5.0 to 9.0 centimeters per second. The maximum power used by the cable heater was approximately 390 W.

Characterization of the experiment was carried out by the thermocouples located within the emplaced mixture and through the analysis of oil / sand mixture samples and gaseous emissions samples. A 180 milliliter (mL) soil sample was collected from a homogenized batch of the pre-treatment mixture, and another soil sample from a homogenized batch of the treated sand and sent to Maxxam Analytics (London, Ontario) for analysis of: 1) petroleum hydrocarbons F1 & BTEX in Soil (Method CCME CWS); 2) petroleum hydrocarbons F2-F4 in Soil (Method CCME CWS); 3) F4G (Method CCME Hydrocarbons Gravimetric); and 4) polyaromatic hydrocarbons (PAH) compounds in soil by GC/MS (Method EPA 8270). A representative sample of the gaseous emissions was drawn from the top of the apparatus at a constant rate for the duration of the experiment to achieve an integrated sample throughout the procedure. Moisture and condensable components were removed from the gas stream and collected in a condensate trap, while the dry gas sample was collected in a 5-liter Tedlar bag. Both dry gas and condensate samples were sent to Maxxam Analytics (London, Ontario) for analysis of: 1) carbon monoxide (CO) and carbon dioxide (CO2) by GC/TCD (Method EPA 3C); 2) BTEX and Volatile Organic Compounds (VOCs) in the gas phase (Method EPA TO-15A); 3) and BTEX and VOCs in the condensate (Method EPA 8260).

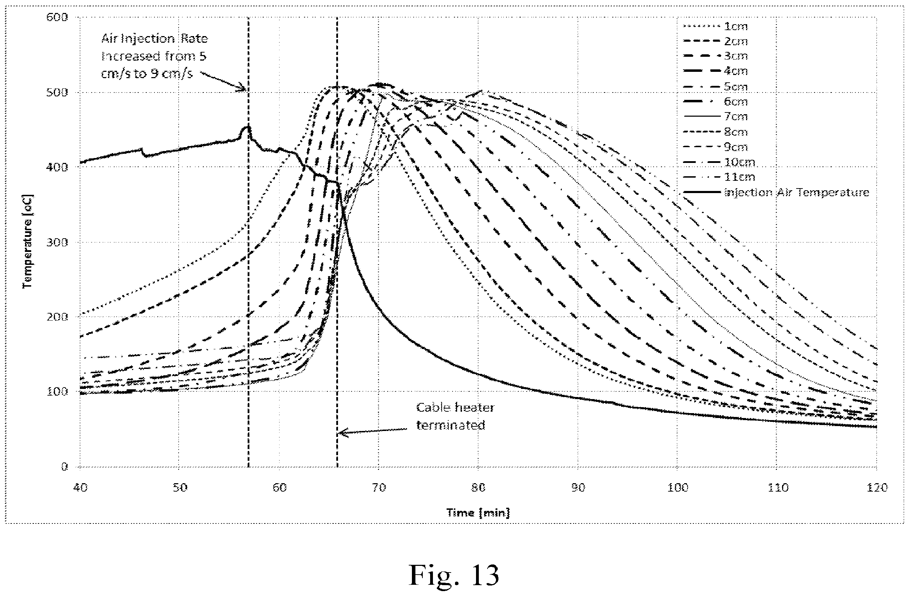

The ignition protocol described above (applying a current to the cable heater with air flow initiated through the air diffuser at a (Darcy) flux of 5.0 centimeters per second, followed by an increase in the air flow to a (Darcy) flux of 9.0 centimeters per second and termination of the heating source) resulted in self-sustained smoldering combustion of the mixture. The self-sustained smoldering behaviour is shown in the temperature-time plots presented in Fig. 13. Self-sustained behaviour is known to occur when decreasing temperature-time plots from one location are crossed by increasing temperature-time plots from a second, adjacent location. This temperature cross-over demonstrates that the reaction creates excess energy which allows the combustion reaction to propagate (in this case, in an upward direction). The peak (maximum) temperatures were measured by thermocouples in the mixture range from approximately 480 to 520 degrees during the experiment, including the period of time following the termination of the cable heater. Analysis of peak temperature arrival times at each thermocouple within the mixture indicates that the smoldering combustion propagation velocity is approximately 0.63 cm/min (1.26 feet per hour).

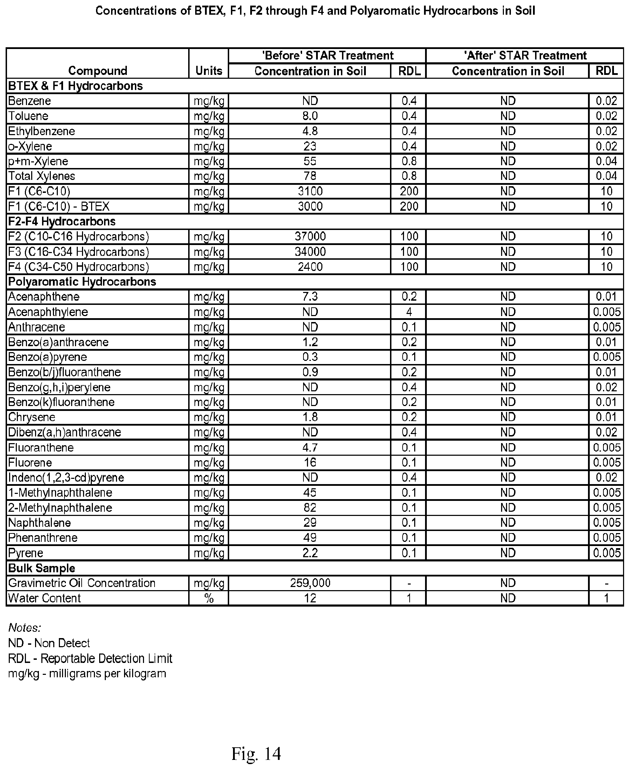

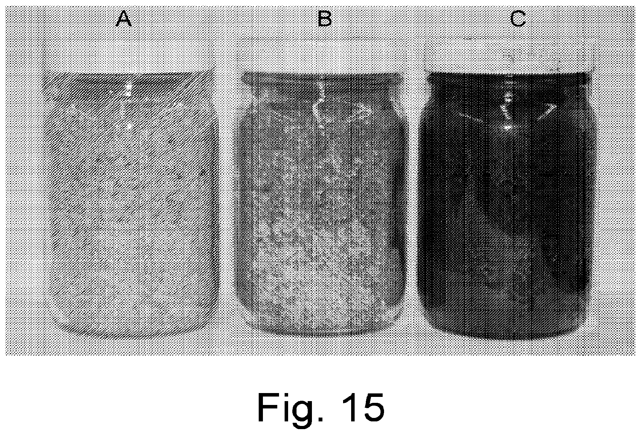

Fig. 14 presents a table of concentrations of petroleum hydrocarbons in the F1 and BTEX range, F2-F4 range, and PAH compounds of the oil / sand mixture before treatment. The measured pre-test water content of the oil / sand mixture was 12% and the oil concentration by gravimetric analysis was 259,000 mg/kg. This equates to a dry weight oil concentration of 139,000 mg/kg. The sum of the F1-F4 fraction of oils is approximately 76,500 mg/kg. Fig. 14 also presents the analysis of the F1 and BTEX, F2-F4, and PAH fractions in soil following treatment. For the post-treatment sample, all analysed compounds were found to be below the minimum detection limits of the analytical instrumentation, indicating 100% volumetric reduction of the organic liquid for the constituents examined (assuming the lack of detection equates to complete absence of constituents). This level of oil removal can be seen in Fig, 15 which shows the photographs of 'before' treatment and 'after' treatment samples.

Concentrations of CO and CO₂ (combustion gases) measured during the test were not detected and 0.4%, respectively. Volatile compounds detected in the vapor phase above 1 part per million by volume (ppmv) include: carbon disulfide, propene, chloromethane, 2-propanone, heptane, and benzene. Volatile compounds detected in the condensate collected from the vapor phase above 1 part per million (ppm) include: benzene, chlorobenzene, ethylbenzene, o-xylene, p+m-xylene and toluene.

Multiple repeat experiments were conducted and very similar results to those described in Fig. 13 were obtained. Modifications to the ignition protocol, including the use of a purely conductive (no air flow prior to ignition) or a purely convective heating procedure (no contact between the cable heater and the mixture), also produces similar results to those described in Fig. 13.

The above experimental data clearly demonstrates that the method of the present invention is a viable treatment technology for the volumetric reduction of organic liquids.

Various modifications may be made to the foregoing without departing from the scope of the present invention. For example, while the experiments described above demonstrate combustion front propagation in an upwards vertical direction, propagation can also proceed horizontally or in any other direction if sufficiently manipulated by the location of the ignition and the direction of air flow within the mixture.

The embodiments of the invention described above are intended to be merely exemplary; numerous variations and modifications will be apparent to those skilled in the art. All such variations and modifications are intended to be within the scope of the present invention as defined in any appended claims.

## Claims

1. A method for volumetric reduction of a waste organic liquid in a volume that is substantially a liquid phase, the method comprising:
admixing the waste organic liquid with a porous matrix material to produce a mixture;
heating a portion of the mixture;
forcing oxidant through the mixture; and
terminating the source of heat applied to the mixture; so as to initiate self-sustaining smoldering combustion of the mixture to cause volumetric reduction of the waste organic liquid, **characterized in that** admixing the porous matrix material comprises:
batch-feeding of the waste organic liquid and the porous material into a vessel; or forming a confinement bed comprising one of the porous matrix material or the waste organic liquid and continuously pouring into the confinement bed the other of the porous matrix material or the waste organic.

2. The method for volumetric reduction of the waste organic liquid according to claim 1, further comprising causing propagation of the combustion away from a point of ignition of the combustion.

3. The method for volumetric reduction of the waste organic liquid according to any of the preceding claims, further comprising aggregating the waste organic liquid in a reaction vessel.

4. The method for volumetric reduction of the waste organic liquid according to claim 1, further comprising aggregating the waste organic liquid in a pile that includes the porous matrix material.

5. The method for volumetric reduction of the waste organic liquid according to claim 1, further comprising aggregating the porous matrix in an organic liquid lagoon.

6. The method for volumetric reduction of the waste organic liquid according to any of claims 1 to 5, further comprising continuously feeding the mixture into a zone of smoldering combustion.

7. The method for volumetric reduction of the waste organic liquid according to any of claims 1 to 6, further comprising using a mixing tool to admix the porous matrix material with the waste organic liquid to produce the mixture.

8. The method for volumetric reduction of the waste organic liquid according to claim 7, wherein the mixing tool includes a rotating helical blade.

9. The method for volumetric reduction of a waste organic liquid according to any of claims 1 or 3-8, wherein admixing the porous matrix material with the waste organic liquid to produce the mixture comprises:
forming a permanent or semi-permanent confinement bed comprising the porous matrix material; and
continuously pouring the waste organic liquid into the confinement bed.

10. The method for volumetric reduction of the waste organic liquid according to any of claims 1 to 9, wherein forcing oxidant through the mixture includes injecting air into the mixture through an injection port.

11. The method for volumetric reduction of the waste organic liquid according to claims 1, 2, 4, 5, 6 or 9, further comprising:
admixing the porous matrix material with the waste organic liquid using a helical mixing tool to produce the mixture;
supplying the mixture via a first conveyor system into the zone of smoldering combustion; and
removing the combusted product via a second conveyor system.

12. The method for volumetric reduction of the waste organic liquid according to any of the preceding claims, wherein the mixture contains a non-combustible material and the method further comprises the step of maintaining self-sustaining smoldering combustion until some or all the non-combustible material is rendered less toxic by exposure to the smoldering heat.

13. The method for volumetric reduction of the waste organic liquid according to any of the preceding claims, further comprising:
adding a supplemental fuel selected from a group comprising vegetable oil, tar, chemical oxidants, drilling muds and petroleum hydrocarbons to the aggregate.

14. The method for volumetric reduction of the waste organic liquid according to any of the preceding claims, wherein:
the porous matrix material is selected from the group consisting of sand, soils, silt, loam, fill, cobbles, gravel, crushed stone, glass, ceramics, zeolite, woodchips, charcoal, coal, drill cuttings and combinations thereof with the waste organic liquid to produce a mixture, wherein the mixture is sufficiently uniform to enable a self-sustaining smoldering combustion.

## Patentansprüche

1. Verfahren zur volumetrischen Reduktion von organischem Flüssigabfall in einem Volumen, das im Wesentlichen eine flüssige Phase ist, wobei das Verfahren Folgendes umfasst:
Vermischen des organischen Flüssigabfalls mit einem porösen Matrixmaterial, um eine Mischung herzustellen;
Erwärmen eines Teils der Mischung;
Treiben eines Oxidationsmittels durch die Mischung; und
Schließen der Quelle der Wärme, die auf die Mischung gebracht wird; um die selbsterhaltende schwelende Verbrennung der Mischung einzuleiten, um eine volumetrische Reduktion des organischen Flüssigabfalls zu bewirken, **dadurch gekennzeichnet, dass** das Beimischen des porösen Matrixmaterials Folgendes umfasst:
satzweise Zuführung des organischen Flüssigabfalls und des porösen Materials in einen Behälter; oder
Ausbilden eines Begrenzungsbettes, umfassend eines aus dem porösen Matrixmaterial oder dem organischen Flüssigabfall und ständiges Gießen in das Begrenzungsbett des anderen aus dem porösen Matrixmaterial und dem organischen Flüssigabfall.

2. Verfahren zur volumetrischen Reduktion von organischem Flüssigabfall nach Anspruch 1, ferner umfassend das Bewirken der Verbreitung der Verbrennung weg von einem Entzündungspunkt der Verbrennung.

3. Verfahren zur volumetrischen Reduktion von organischem Flüssigabfall nach einem der vorstehenden Ansprüche, ferner umfassend das Sammeln des organischen Flüssigabfalls in einem Reaktionsbehälter.

4. Verfahren zur volumetrischen Reduktion von organischem Flüssigabfall nach Anspruch 1, ferner umfassend das Sammeln des organischen Flüssigabfalls in einem Haufen, der das poröse Matrixmaterial umfasst.

5. Verfahren zur volumetrischen Reduktion von organischem Flüssigabfall nach Anspruch 1, ferner umfassend das Sammeln des porösen Materials in einem organischen Flüssigkeitsteich.

6. Verfahren zur volumetrischen Reduktion von organischem Flüssigabfall nach einem der Ansprüche 1 bis 5, ferner umfassend das ständige Zuleiten der Mischung in eine Zone schwelender Verbrennung.

7. Verfahren zur volumetrischen Reduktion von organischem Flüssigabfall nach einem der Ansprüche 1 bis 6, ferner umfassend das Verwenden eines Mischgeräts zum Vermischen des porösen Matrixmaterials mit dem organischen Flüssigabfall, um die Mischung herzustellen.

8. Verfahren zur volumetrischen Reduktion von organischem Flüssigabfall nach Anspruch 7, wobei das Mischgerät ein rotierendes spiralförmiges Blatt umfasst.

9. Verfahren zur volumetrischen Reduktion von organischem Flüssigabfall nach einem der Ansprüche 1 oder 3-8, wobei das Vermischen des porösen Matrixmaterials mit dem organischen Flüssigabfall, um die Mischung herzustellen, Folgendes umfasst:
Ausbilden eines permanenten oder halbpermanenten Begrenzungsbettes, das das poröse Matrixmaterial umfasst; und
ständiges Gießen des organischen Flüssigabfalls in das Begrenzungsbett.

10. Verfahren zur volumetrischen Reduktion von organischem Flüssigabfall nach einem der Ansprüche 1 bis 9, wobei das Treiben des Oxidationsmittels durch die Mischung das Einspritzen von Luft in die Mischung durch eine Einspritzöffnung umfasst.

11. Verfahren zur volumetrischen Reduktion von organischem Flüssigabfall nach den Ansprüchen 1, 2, 4, 5, 6 oder 9, ferner umfassend:
Vermischen des porösen Matrixmaterials mit dem organischen Flüssigabfall unter Verwendung eines spiralförmigen Mischgeräts, um die Mischung herzustellen;
Liefern der Mischung über eine erste Fördereinrichtung in die Zone der schwelenden Verbrennung; und
Entfernen des verbrannten Produktes über eine zweite Fördereinrichtung.

12. Verfahren zur volumetrischen Reduktion von organischem Flüssigabfall nach einem der vorstehenden Ansprüche, wobei die Mischung ein nichtbrennbares Material umfasst und das Verfahren ferner den Schritt des Erhaltens der selbsterhaltenden schwelenden Verbrennung, bis das nichtbrennbare Material teilweise oder insgesamt durch Exposition gegenüber der schwelenden Hitze weniger toxisch gemacht wird, umfasst.

13. Verfahren zur volumetrischen Reduktion von organischem Flüssigabfall nach einem der vorstehenden Ansprüche, ferner umfassend:
Hinzufügen eines zusätzlichen Brennstoffs, der aus einer Gruppe auswählt ist, die aus Pflanzenöl, Teer, chemischen Oxidationsmitteln, Bohrschlämmen und Erdölkohlenwasserstoffen besteht, zur Gesamtmenge.

14. Verfahren zur volumetrischen Reduktion von organischem Flüssigabfall nach einem der vorstehenden Ansprüche, wobei:
das poröse Matrixmaterial aus der Gruppe ausgewählt ist, die aus Sand, Erdreich, Schlick, Lehm, Schüttmaterial, Geröll, Kies, Schotter, Glas, Keramik, Zeolith, Holzspänen, Holzkohle, Steinkohle, Bohrklein und Kombinationen davon besteht, um mit dem organischen Flüssigabfall eine Mischung herzustellen, wobei die Mischung ausreichend homogen ist, um eine selbsterhaltende schwelende Verbrennung zu ermöglichen.

## Revendications

1. Procédé de réduction volumétrique d'un liquide organique résiduel dans un volume qui est sensiblement en phase liquide, le procédé comprenant :
le mélange du liquide organique résiduel avec une matière de matrice poreuse pour produire un mélange ;
le chauffage d'une partie du mélange ;
le fait de forcer l'oxydant à travers le mélange ; et
l'arrêt de la source de chaleur appliquée au mélange ; de manière à initier une combustion couvante auto-entretenue du mélange pour entraîner une réduction volumétrique du liquide organique résiduel, **caractérisé en ce que** le mélange de la matière de matrice poreuse comprend :
la distribution par lots du liquide organique résiduel et de la matière poreuse dans un récipient ; ou
la formation d'un lit de confinement comprenant l'un de la matière de matrice poreuse ou du liquide organique résiduel et le versement continu dans le lit de confinement de l'autre de la matière de matrice poreuse ou du liquide organique résiduel.

2. Procédé de réduction volumétrique du liquide organique résiduel selon la revendication 1, comprenant en outre le fait d'entraîner la propagation de la combustion à l'écart d'un point d'allumage de la combustion.

3. Procédé de réduction volumétrique du liquide organique résiduel selon l'une quelconque des revendications précédentes, comprenant en outre l'agrégation du liquide organique résiduel dans un récipient de réaction.

4. Procédé de réduction volumétrique du liquide organique résiduel selon la revendication 1, comprenant en outre l'agrégation du liquide organique résiduel dans un empilement qui inclut la matière de matrice poreuse.

5. Procédé de réduction volumétrique du liquide organique résiduel selon la revendication 1, comprenant en outre l'agrégation de la matrice poreuse dans un bassin liquide organique.

6. Procédé de réduction volumétrique du liquide organique résiduel selon l'une quelconque des revendications 1 à 5, comprenant en outre l'alimentation continue du mélange dans une zone de combustion couvante.

7. Procédé de réduction volumétrique du liquide organique résiduel selon l'une quelconque des revendications 1 à 6, comprenant en outre l'utilisation d'un outil de mélange pour mélanger la matière de matrice poreuse avec le liquide organique résiduel pour produire le mélange.

8. Procédé de réduction volumétrique du liquide organique résiduel selon la revendication 7, dans lequel l'outil de mélange inclut une pale hélicoïdale rotative.

9. Procédé de réduction volumétrique d'un liquide organique résiduel selon l'une quelconque des revendications 1 ou 3 à 8, dans lequel le mélange de la matière de matrice poreuse avec le liquide organique résiduel pour produire le mélange comprend :
la formation d'un lit de confinement permanent ou semi-permanent comprenant la matière de matrice poreuse ; et
le versement continu du liquide organique résiduel dans le lit de confinement.

10. Procédé de réduction volumétrique du liquide organique résiduel selon l'une quelconque des revendications 1 à 9, dans lequel le fait de forcer l'oxydant à travers le mélange inclut l'injection d'air dans le mélange à travers un orifice d'injection.

11. Procédé de réduction volumétrique du liquide organique résiduel selon l'une quelconque des revendications 1, 2, 4, 5, 6 ou 9, comprenant en outre :
le mélange de la matière de matrice poreuse avec le liquide organique résiduel à l'aide d'un outil de mélange hélicoïdal pour produire le mélange ;
la fourniture du mélange par l'intermédiaire d'un premier système de transport dans la zone de combustion couvante ; et
le retrait du produit en combustion par l'intermédiaire d'un second système de transport.

12. Procédé de réduction volumétrique du liquide organique résiduel selon l'une quelconque des revendications précédentes, dans lequel le mélange contient une matière non combustible et le procédé comprend en outre l'étape de conservation de la combustion couvante auto-entretenue jusqu'à ce qu'une partie ou l'ensemble de la matière non combustible soit rendue moins toxique par l'exposition à la chaleur couvante.

13. Procédé de réduction volumétrique du liquide organique résiduel selon l'une quelconque des revendications précédentes, comprenant en outre :
l'ajout d'un combustible supplémentaire choisi dans le groupe comprenant l'huile végétale, le goudron, des oxydants chimiques, des boues de forage et des hydrocarbures pétroliers à l'agrégat.

14. Procédé de réduction volumétrique du liquide organique résiduel selon l'une quelconque des revendications précédentes, dans lequel :
la matière de matrice poreuse est choisie dans le groupe constitué de sable, de sols, de limon, de loam, de charge, de galets, de gravier, de pierre concassée, de verre, de céramique, de zéolite, de copeaux de bois, de charbon de bois, de charbon, de déblais de forage et des combinaisons de ceux-ci avec le liquide organique résiduel pour produire un mélange, dans lequel le mélange est suffisamment uniforme pour permettre une combustion couvante auto-entretenue.
